(19) Europäisches Patentamt
European Patent Office
Office européen des brevets

(11) **EP 4 549 511 A1**

(12) **EUROPEAN PATENT APPLICATION**
published in accordance with Art. 153(4) EPC

(43) Date of publication:
**07.05.2025 Bulletin 2025/19**

(21) Application number: **23843014.4**

(22) Date of filing: **19.07.2023**

(51) International Patent Classification (IPC):
**C08L 33/02** (2006.01)    **B01J 20/26** (2006.01)
**B01J 20/28** (2006.01)

(52) Cooperative Patent Classification (CPC):
**B01J 20/26; B01J 20/28; C08L 33/02**

(86) International application number:
**PCT/JP2023/026443**

(87) International publication number:
**WO 2024/019091 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **22.07.2022  JP 2022117093**

(71) Applicant: **SUMITOMO Seika Chemicals Co., Ltd.
Kako-gun, Hyogo 675-0145 (JP)**

(72) Inventor: **KAJIMOTO Mayu
Himeji-shi, Hyogo 672-8076 (JP)**

(74) Representative: **Vossius & Partner
Patentanwälte Rechtsanwälte mbB
Siebertstrasse 3
81675 München (DE)**

(54) **WATER-ABSORBING RESIN PARTICLES AND ABSORBENT ARTICLE**

(57) There are disclosed Water-absorbent resin particles having a water absorption rate of 3 to 30 seconds and a water absorption amount under a load of 2.07 kPa of 10 mL/g or more.

**Fig.1**

## Description

### Technical Field

The present disclosure relates to water-absorbent resin particles and an absorbent article.

### Background Art

Water-absorbent resin particles are used for sanitary materials such as a diaper, a sanitary product, and a sheet for nursing care; agricultural and horticultural materials such as a water retaining material and a soil improver; industrial materials such as a water cut-off material for a cable and a dew condensation prevention material; treatment material for animal excrement such as a pet sheet and a toilet formulation for a dog or a cat; formulations for a portable toilet, an air freshener, a drip absorption sheet for meat, and a moisturizing cosmetic; and the like. For example, Patent Literature 1 discloses a water-absorbent composite sheet that is an absorbent article for nursing care, which has a base material and substantially spherical water-absorbent resin particles intermittently fixed to the base material.

### Citation List

### Patent Literature

[Patent Literature 1] Japanese Unexamined Patent Publication No. 2005-323842

### Summary of Invention

### Technical Problem

The present disclosure relates to water-absorbent resin particles capable of suppressing an amount of return and a diffusion area of an absorbent article that can be used for nursing care, and an absorbent article including the water-absorbent resin particles.

### Solution to Problem

The present disclosure includes the following aspects.

[Aspect 1] Water-absorbent resin particles having a water absorption rate of 3 to 30 seconds and a water absorption amount under a load of 2.07 kPa (hereinafter, may be referred to as "a water absorption amount under a load") of 10 mL/g or more.

[Aspect 2] The water-absorbent resin particles according to [Aspect 1], in which the water absorption rate is 6 to 10 seconds, and a medium particle diameter is 150 $\mu$m or more.

[Aspect 3] The water-absorbent resin particles according to [Aspect 1] or [Aspect 2], in which the water-absorbent resin particles comprise water-absorbent resin particles A and water-absorbent resin particles B, a water absorption rate of the water-absorbent resin particles A is 5 seconds or less, a water absorption amount under a load of 2.07 kPa of the water-absorbent resin particles A is 8 to 35 mL/g, a water absorption rate of the water-absorbent resin particles B is 15 seconds or more, and a water absorption amount under a load of 2.07 kPa of the water-absorbent resin particles B is 20 to 35 mL/g.

[Aspect 4] An absorbent article including the water-absorbent resin particles according to any one of [Aspect 1] to [Aspect 3].

### Advantageous Effects of Invention

By using the water-absorbent resin particles according to the present disclosure, it is possible to provide an absorbent article in which the amount of return and the diffusion area of the absorbent article used for nursing care are suppressed.

### Brief Description of Drawings

Fig. 1 is a partial cross-sectional view showing an example of an absorbent article.
Fig. 2 is a schematic view showing a measurement device for a water absorption amount of water-absorbent resin particles under a load.

## Description of Embodiments

Water-absorbent resin particles and an absorbent article using the water-absorbent resin particles according to the present disclosure will be described below. However, the present invention is not limited to the following examples.

In the present specification, "acrylic" and "methacrylic" are collectively referred to as "(meth)acrylic". "Acrylate" and "methacrylate" are also referred to as "(meth)acrylate". In addition, "(poly)" means both of a case where there is a prefix of "poly" and a case where there is no prefix thereof.

In a numerical value range described in a stepwise manner in the present specification, an upper limit value or a lower limit value of a numerical value range in a certain step can be optionally combined with an upper limit value or a lower limit value of a numerical value range in another step. In a numerical value range described in the present specification, the upper limit value or the lower limit value of the numerical value range may be replaced with the value shown in the examples.

The material exemplified in the present specification may be used alone, or two or more kinds thereof may be used in combination. In a case where there are a plurality of substances corresponding to each of components in a composition, a content of each of the components in the composition means the total amount of the plurality of substances present in the composition unless otherwise specified.

In the present specification, "room temperature" refers to $25 \pm 2°C$. In addition, in addition to shape structures formed over the entire surface, the term "layer" also encompasses shape structures which are partially formed in a case where observed in a plan view. "Physiological saline" refers to a sodium chloride aqueous solution having a concentration of 0.9% by mass.

[Characteristics of water-absorbent resin particles]

(Water absorption rate)

The water absorption rate of the water-absorbent resin particles according to the present disclosure is 3 to 30 seconds; however, it may be 4 to 30 seconds, 6 to 30 seconds, 7 to 30 seconds, 3 to 22 seconds, 3 to 18 seconds, 3 to 17 seconds, 3 to 13 seconds, 3 to 10 seconds, 4 to 22 seconds, 4 to 18 seconds, 4 to 17 seconds, 4 to 13 seconds, 4 to 10 seconds, 6 to 22 seconds, 6 to 18 seconds, 6 to 17 seconds, 6 to 13 seconds, 6 to 10 seconds, 7 to 22 seconds, 7 to 18 seconds, 7 to 17 seconds, 7 to 13 seconds, or 7 to 10 seconds.

The above-mentioned water absorption rate is a water absorption rate with respect to physiological saline, and a specific measuring method therefor is as described in Examples described later.

(Water retention ability)

The water retention ability of the water-absorbent resin particles according to the present disclosure may be, for example, 25 to 60 g/g, 25 to 55 g/g, 25 to 50 g/g, 25 to 47 g/g, 30 to 60 g/g, 30 to 55 g/g, 30 to 50 g/g, 30 to 47 g/g, 35 to 60 g/g, 35 to 55 g/g, 35 to 50 g/g, 35 to 47 g/g, 39 to 60 g/g, 39 to 55 g/g, 39 to 50 g/g, 39 to 47 g/g, 40 to 60 g/g, 40 to 55 g/g, 40 to 50 g/g, 40 to 47 g/g, 44 to 60 g/g, 44 to 55 g/g, 44 to 50 g/g, or 44 to 47 g/g.

The above-mentioned water retention ability is a water retention ability with respect to physiological saline, and a specific measuring method therefor is as described in Examples described later.

(Water absorption amount under load)

The water absorption amount under a load of 2.07 kPa of the water-absorbent resin particles according to the present disclosure is 10 mL/g or more; however, it may be 10 to 30 mL/g, 10 to 25 mL/g, 10 to 22 mL/g, 10 to 20 mL/g, 10 to 19 mL/g, 15 to 30 mL/g, 15 to 25 mL/g, 15 to 22 mL/g, 15 to 20 mL/g, 15 to 19 mL/g, 17 to 30 mL/g, 17 to 25 mL/g, 17 to 22 mL/g, 17 to 20 mL/g, 17 to 19 mL/g, 18 to 30 mL/g, 18 to 25 mL/g, 18 to 22 mL/g, 18 to 20 mL/g, or 18 to 19 mL/g.

The above-mentioned water absorption amount under a load is a water absorption amount under the load with respect to physiological saline, and a specific measuring method therefor is as described in Examples described later.

(Medium particle diameter)

The medium particle diameter of the water-absorbent resin particles according to the present disclosure may be, for example, 150 $\mu$m or more, 150 to 400 $\mu$m, 150 to 380 $\mu$m, 150 to 360 $\mu$m, 150 to 300 $\mu$m, 150 to 250 $\mu$m, 170 to 400 $\mu$m, 170 to 380 $\mu$m, 170 to 360 $\mu$m, 170 to 300 $\mu$m, 170 to 250 $\mu$m, 200 to 400 $\mu$m, 200 to 380 $\mu$m, 200 to 360 $\mu$m, 200 to 300 $\mu$m,

or 200 to 250 μm.

A specific measuring method for the above-mentioned medium particle diameter is as described in Examples described later.

The water-absorbent resin particles according to the present disclosure may be a powder consisting of a single kind of particles, or may be a particle mixture containing a plurality of kinds of particles having physical properties different from each other in at least one of the water absorption rate or the water absorption amount under a load.

In a case where the water-absorbent resin particles are a particle mixture containing a plurality of kinds of particles, the particle mixture may contain at least the following water-absorbent resin particles A and the following water-absorbent resin particles B. The water absorption rate of the water-absorbent resin particles A is 5 seconds or less, and the water absorption amount under a load of 2.07 kPa of the water-absorbent resin particles A is 8 to 35 mL/g. The water absorption rate of the water-absorbent resin particles B is 15 seconds or more, and the water absorption amount under a load of 2.07 kPa of the water-absorbent resin particles B is 20 to 35 mL/g. The water-absorbent resin particles including the water-absorbent resin particles A and the water-absorbent resin particles B can be manufactured by a method including mixing a powder of the water-absorbent resin particles A and the powder of the water-absorbent resin particles B to form water-absorbent resin particles which are a powder mixture.

The water absorption rate of the water-absorbent resin particles A may be 1 to 5 seconds, 1 to 4 seconds, 1 to 3 seconds, 2 to 5 seconds, 2 to 4 seconds, or 2 to 3 seconds. The water absorption amount of the water-absorbent resin particles A under a load may be 8 to 30 mL/g, 8 to 25 mL/g, 8 to 23 mL/g, 8 to 20 mL/g, 8 to 15 mL/g, 10 to 30 mL/g, 10 to 25 mL/g, 10 to 23 mL/g, 10 to 20 mL/g, or 10 to 15 mL/g.

The water retention ability of the water-absorbent resin particles A may be 10 to 45 g/g, 10 to 40 g/g, 15 to 45 g/g, 15 to 40 g/g, 20 to 45 g/g, 20 to 40 g/g, 25 to 45 g/g, 25 to 40 g/g, 30 to 45 g/g, 30 to 40 g/g, 35 to 45 g/g, or 35 to 40 g/g. The medium particle diameter of the water-absorbent resin particles A may be 100 to 450 μm, 100 to 400 μm, 100 to 380 μm, 100 to 360 μm, 150 to 450 μm, 150 to 400 μm, 150 to 380 μm, 150 to 360 μm, 200 to 450 μm, 200 to 400 μm, 200 to 380 μm, 200 to 360 μm, 250 to 450 μm, 250 to 400 μm, 250 to 380 μm, 250 to 360 μm, 300 to 450 μm, 300 to 400 μm, 300 to 380 μm, or 300 to 360 μm.

The water absorption rate of the water-absorbent resin particles B may be 15 to 60 seconds, 15 to 55 seconds, 15 to 45 seconds, 15 to 35 seconds, 15 to 25 seconds, 20 to 60 seconds, 20 to 55 seconds, 20 to 45 seconds, 20 to 35 seconds, 20 to 25 seconds, 25 to 60 seconds, 25 to 55 seconds, 25 to 45 seconds, 25 to 35 seconds, 30 to 60 seconds, 30 to 55 seconds, 30 to 45 seconds, or 30 to 35 seconds. The water absorption amount of the water-absorbent resin particles B under a load may be 20 to 30 mL/g, 20 to 25 mL/g, 25 to 35 mL/g, 25 to 30 mL/g, or 30 to 35 mL/g.

The water retention ability of the water-absorbent resin particles B may be 30 to 60 g/g, 30 to 55 g/g, 30 to 50 g/g, 30 to 45 g/g, 35 to 60 g/g, 35 to 55 g/g, 35 to 50 g/g, 35 to 45 g/g, 40 to 60 g/g, 40 to 55 g/g, 40 to 50 g/g, or 40 to 45 g/g. The medium particle diameter of the water-absorbent resin particles B may be 100 to 450 μm, 100 to 400 μm, 100 to 380 μm, 100 to 360 μm, 150 to 450 μm, 150 to 400 μm, 150 to 380 μm, 150 to 360 μm, 200 to 450 μm, 200 to 400 μm, 200 to 380 μm, 200 to 360 μm, 250 to 450 μm, 250 to 400 μm, 250 to 380 μm, 250 to 360 μm, 300 to 450 μm, 300 to 400 μm, 300 to 380 μm, or 300 to 360 μm.

In a case where the water-absorbent resin particles include a plurality of kinds of particles, a mass-based ratio of the water-absorbent resin particles A to the water-absorbent resin particles B (mass of water-absorbent resin particles A:mass of water-absorbent resin particles B) may be 1:19 to 19:1, 1:19 to 9:1, 1:19 to 3:1, 1:19 to 13:7, 1:19 to 3:2, 1:19 to 1:1, 1:14 to 19:1, 1:14 to 9:1, 1:14 to 3:1, 1:14 to 13:7, 1:14 to 3:2, 1:14 to 1:1, 1:12 to 19:1, 1:12 to 9:1, 1:12 to 3:1, 1:12 to 13:7, 1:12 to 3:2, 1:12 to 1:1, 2:13 to 19:1, 2:13 to 9:1, 2:13 to 3:1, 2:13 to 13:7, 2:13 to 3:2, 2:13 to 1:1, 2:15 to 19:1, 2:15 to 9:1, 2:15 to 3:1, 2:15 to 13:7, 2:15 to 3:2, 2:15 to 1:1, 3:17 to 19:1, 3:17 to 9:1, 3:17 to 3:1, 3:17 to 13:7, 3:17 to 3:2, 3:17 to 1:1, 1:3 to 19:1, 1:3 to 9:1, 1:3 to 3:1, 1:3 to 13:7, 1:3 to 3:2, 1:3 to 1:1 2:3 to 19:1, 2:3 to 9:1, 2:3 to 3:1, 2:3 to 13:7, 2:3 to 3:2, or 2:3 to 1:1. By controlling the mass ratio of the water-absorbent resin particles A to the water-absorbent resin particles B, it is possible to control, within any range, various characteristics of the water-absorbent resin particles, such as the water absorption rate and the water absorption amount under a load.

By using the water-absorbent resin particles according to the present disclosure for an absorbent article for nursing care, the amount of return and the diffusion area of the absorbent article are suppressed. As a result, a good feeling of use can be imparted to the absorbent article. The inventors of the present invention presume the mechanism thereof is as follows.

Since it is presupposed that an absorbent article for nursing care (particularly, a waterproof sheet that is used by being laid on a bed or a futon) is used for a long time in a state where a user lies down thereon, the amount of return and the diffusion area has a great influence on the feeling of use of the absorbent article. Therefore, an absorbent article having a small amount of return and a narrow diffusion area is desirable. However, in the absorbent article, the reduction of the amount of return and the reduction of the diffusion area are likely to be in a trade-off relationship.

The inventors of the present invention initially focused on the above-mentioned trade-off relationship property and considered that an absorbent article in which both the amount of return and the diffusion area are suppressed can be configured in a case where the water absorption rate of the water-absorbent resin particles is adjusted to a moderate value.

That is, the inventors of the present invention focused on the fact that the diffusion area is usually likely to spread in a case where the water absorption rate of the water-absorbent resin particles is too slow, whereas the liquid is less likely to diffuse and thus the amount of return is likely to increase in a case where the water absorption rate is too fast, and considered that an absorbent article in which both the amount of return and the diffusion area are moderately suppressed can be configured in a case where the water absorption rate is adjusted to a moderate value.

However, according to the verification by the inventors of the present invention, it was not possible to obtain, with good reproducibility, an absorbent article in which both the amount of return and the diffusion area were moderately suppressed even in a case where only the water absorption rate was adjusted. As a result of studying the cause, the inventors of the present invention have found that the water absorption amount under a load is important. That is, the inventors of the present invention have found that even in a case where the water absorption rate is a moderate value, the gel blocking phenomenon is likely to occur in a case where the water absorption amount under a load is too small, and the amount of return is likely to increase in a case where the diffusion area is suppressed too much. The blocking phenomenon is a phenomenon in which liquid permeability is deteriorated due to the filling of the gap between the particles with the swollen water-absorbent resin particles (swollen gel). That is, the inventors of the present invention have found that the largeness and smallness of the amount of water absorption amount under a load is an important factor that affects the amount of return and the diffusion area of the absorbent article. The inventors of the present invention further carried out studies and have found that 2.07 kPa is the optimum load condition for the water-absorbent resin particles for the evaluation of the absorbent article. This load condition assumes conditions under which the absorbent article is generally used (conditions in which pressure of a laid futon or the like is applied to the upper surface of the absorbent article). Based on such findings, the inventors of the present invention have found that an absorbent article in which both the amount of return and the diffusion area are suppressed can be configured by using water-absorbent resin particles having a specific water absorption rate and a specific water absorption amount under a load.

In addition, the inventors of the present invention have found that, in the process of the verification, an absorbent article in which both the amount of return and the diffusion area are suppressed is easily obtained in a case where the water-absorbent resin particles A and the water-absorbent resin particles B are included, as compared with a case where a single kind of water-absorbent resin particles is used. The inventors consider the mechanism as follows. By including the water-absorbent resin particles A and the water-absorbent resin particles B, the diffusion area is suppressed by the water-absorbent resin particles A having a relatively fast water absorption rate; however, the diffusion area is prevented from being excessively suppressed by the water-absorbent resin particles B having a relatively moderately slow water absorption rate and a specific water absorption amount under a load, and the amount of return is reduced. As a result, it is easy to obtain an absorbent article in which both the amount of return and the diffusion area are suppressed.

[Manufacturing method for water-absorbent resin particles]

The water-absorbent resin particles according to the present disclosure may be, for example, a resin obtained by polymerizing a water-soluble ethylenically unsaturated monomer. The water-absorbent resin particles may include a polymer particle containing a polymer of a water-soluble ethylenically unsaturated monomer. Examples of the polymer constituting the water-absorbent resin particles include a hydrolyzate of a starch-acrylonitrile graft copolymer, a neutralized product of a starch-acrylic acid graft copolymer, a saponified product of a vinyl acetate-acrylic acid ester copolymer, and a partially neutralized product of a polyacrylic acid. The polymer may be a crosslinking polymer obtained by crosslinking a polymer with a crosslinking agent. The crosslinking agent can be, for example, one or more selected from an internal crosslinking agent, an intermediate crosslinking agent, and a surface crosslinking agent, which will be described later.

Examples of the method for polymerizing the water-soluble ethylenically unsaturated monomer include an aqueous solution polymerization method and a reverse phase suspension polymerization method in which polymerization is carried out in the presence of a surfactant in a hydrocarbon dispersion medium. Hereinafter, a case where a reverse phase suspension polymerization method is adopted will be described as an example of the manufacturing method for the water-absorbent resin particles according to the present disclosure.

The manufacturing method for water-absorbent resin particles by a reverse phase suspension polymerization method includes a polymerization step. The polymerization step is a step of mixing an oily liquid containing a hydrocarbon dispersion medium with an aqueous solution containing an aqueous solvent and a water-soluble ethylenically unsaturated monomer, obtaining a suspension in which the aqueous solution is dispersed in the above-mentioned oily liquid, and then polymerizing the water-soluble ethylenically unsaturated monomer. The polymerization reaction in the polymerization step is a W/O type reverse phase suspension polymerization method in which polymerization is carried out by using an oily liquid (O) containing a hydrocarbon dispersion medium as a continuous phase and using an aqueous solution (W) containing water as a liquid droplet-like discontinuous phase that is dispersed in the above-mentioned continuous phase.

<Constitution of suspension>

[Aqueous solution]

The aqueous solution is a liquid that is dispersed in the oily liquid in the reverse phase suspension polymerization method. The aqueous solution contains an aqueous solvent and a water-soluble ethylenically unsaturated monomer and may further contain any additive. The additive may include, for example, an internal crosslinking agent, a thickener, a hydrophilic polymer dispersant, a radical polymerization initiator, a chain transfer agent, a foaming agent, and a metal chelating agent, which will be described later, or a combination thereof.

(1) Aqueous solvent

The aqueous solvent may be water, may be a hydrophilic organic solvent, or may be a mixed solvent containing water and a hydrophilic solvent. In a case where a mixed solvent is used, 90% by mass or more of the mixed solvent may be water. Examples of the hydrophilic organic solvent include lower alcohols such as methyl alcohol, ethyl alcohol, and isopropyl alcohol, and ketones such as acetone and methyl ethyl ketone. One kind of the hydrophilic organic solvent may be used alone, or two or more kinds thereof may be used in combination.

(2) Water-soluble ethylenically unsaturated monomer

Examples of the water-soluble ethylenically unsaturated monomer include an ethylenically unsaturated monomer containing at least one functional group selected from the group consisting of a carboxyl group, a sulfo group, an amide group, and an amino group. Examples of the water-soluble ethylenically unsaturated monomer include (meth)acrylic acid (hereinafter, "acrylic" and "methacrylic" are collectively referred to as "(meth)acrylic") and an alkali salt thereof, 2-(meth)acrylamide-2-methylpropane sulfonic acid and an alkali salt thereof, (meth)acrylamide, N,N-dimethyl (meth)acrylamide, 2-hydroxyethyl (meth)acrylate, N-methylol (meth)acrylamide, polyethylene glycol mono(meth)acrylate, N,N-diethylaminoethyl (meth)acrylate, N,N-diethylaminopropyl (meth)acrylate, and diethylaminopropyl (meth)acrylamide. In a case where a water-soluble ethylenically unsaturated monomer has an amino group, the amino group may be quaternized. A functional group such as a carboxyl group and an amino group, which is contained in the monomer, can function as a functional group that is capable of carrying out crosslinking in a surface crosslinking step to be described later. One kind of the water-soluble ethylenically unsaturated monomer may be used alone, or two or more kinds thereof may be used in combination.

In a case where the water-soluble ethylenically unsaturated monomer has an acid group such as (meth)acrylic acid and a 2-(meth)acrylamide-2-methylpropane sulfonic acid, the acid group may be neutralized by an alkaline neutralizing agent such as an alkali metal salt to form an alkali salt. Examples of the alkaline neutralizing agent include aqueous solutions of sodium hydroxide, potassium hydroxide, ammonia, and the like. One kind of the alkaline neutralizing agent may be used alone, or two or more kinds thereof may be used in combination. The degree of neutralization with respect to all acid groups by the alkaline neutralizing agent may be 10% to 100% by mole, 30% to 90% by mole, 50% to 80% by mole, or 60% to 78% by mole.

The water-soluble ethylenically unsaturated monomer may include at least one compound selected from the group consisting of (meth)acrylic acid and a salt thereof, acrylamide, (meth)acrylamide, and N,N-dimethyl acrylamide, or may include at least one compound selected from the group consisting of (meth)acrylic acid and a salt thereof and acrylamide. Further, since the above-described water absorption rate and the above-described water absorption amount under a load can be easily achieved, (meth)acrylic acid and a salt thereof can be used.

The concentration of the water-soluble ethylenically unsaturated monomer in the aqueous solution may be in a range of 20% by mass to the saturated concentration, or may be 25% to 50% by mass, 30% to 45% by mass, or 35% to 42% by mass.

Another monomer may be used in addition to these water-soluble ethylenically unsaturated monomers. The other monomer can be used by being mixed with, for example, an aqueous solution containing the above-described water-soluble ethylenically unsaturated monomer. The use amount of the water-soluble ethylenically unsaturated monomer may be 70% to 100% by mole with respect to the total amount of monomers. The ratio of (meth)acrylic acid and a salt thereof may be 70% to 100% by mole with respect to the total amount of the monomers.

(3) Internal crosslinking agent

The aqueous solution may contain an internal crosslinking agent. The internal crosslinking agent may be a compound having two or more reactive functional groups. Examples thereof include di or tri (meth)acrylic acid esters of polyols such as ethylene glycol, propylene glycol, trimethylolpropane, glycerin, polyoxyethylene glycol, polyoxypropylene glycol, and polyglycerin; unsaturated polyesters obtained by reacting the above-described polyols with unsaturated acids (such as maleic acid and fumaric acid); bis(meth)acrylamides such as N,N'-methylenebis(meth)acrylamide; di or tri (meth)acrylic acid esters obtained by reacting a polyepoxide with (meth)acrylic acid; carbamyl di(meth)acrylate esters obtained by reacting a polyisocyanate (such as tolylene diisocyanate and hexamethylene diisocyanate) with hydroxyethyl (meth) acrylate; compounds having two or more polymerizable unsaturated groups, such as allylated starch, allylated cellulose, diallyl phthalate, N,N',N"-triallyl isocyanurate, and divinylbenzene; polyglycidyl compounds such as (poly)ethylene glycol diglycidyl ether, (poly)propylene glycol diglycidyl ether, (poly)glycerin diglycidyl ether, (poly)glycerin triglycidyl ether, (poly) propylene glycol polyglycidyl ether, and polyglycerol polyglycidyl ether; haloepoxy compounds such as epichlorohydrin, epibromohydrin, and $\alpha$-methyl epichlorohydrin; and isocyanate compounds (such as 2,4-tolylene diisocyanate and hexamethylene diisocyanate), and other internal crosslinking agents. The internal crosslinking agent may be used alone, or two or more kinds thereof may be used in combination.

The internal crosslinking agent may be a polyglycidyl compound or a diglycidyl ether compound. The internal crosslinking agent may contain at least one compound selected from the group consisting of (poly)ethylene glycol diglycidyl ether, (poly)propylene glycol diglycidyl ether, and (poly)glycerin diglycidyl ether.

By using the internal crosslinking agent, a polymer to be obtained is moderately crosslinked, and thus the properties of water solubility are suppressed, which makes it easy to adjust the water retention ability in the above-described range. The amount of the internal crosslinking agent may be 0.01 to 0.50 mmol, 0.01 to 0.30 mmol, 0.01 to 0.20 mmol, 0.01 to 0.18 mmol, 0.01 to 0.15 mmol, 0.05 to 0.50 mmol, 0.05 to 0.30 mmol, 0.05 to 0.20 mmol, 0.05 to 0.18 mmol, or 0.05 to 0.15 mmol per 1 mol of the water-soluble ethylenically unsaturated monomer.

(3) Thickener

The aqueous solution may contain a thickener. Examples of the thickener include hydroxyalkyl cellulose such as hydroxyethyl cellulose (HEC) and hydroxypropyl cellulose (HPC); hydroxyalkyl alkyl cellulose such as hydroxyethyl methyl cellulose, hydroxypropyl methyl cellulose, and hydroxyethyl ethyl cellulose; carboxyalkyl cellulose such as carboxymethyl cellulose; and carboxyalkyl hydroxyalkyl cellulose such as carboxymethyl hydroxyethyl cellulose. The thickener may be at least one compound selected from hydroxyalkyl cellulose, hydroxyalkyl alkyl cellulose, or carboxyalkyl hydroxyalkyl cellulose, may be hydroxyethyl cellulose and/or hydroxypropyl cellulose, or may be hydroxyethyl cellulose. One kind of the thickener may be used alone, or two or more kinds thereof may be used in combination.

The amount of the thickener may be 0.05 to 20 parts by mass, 0.2 to 10 parts by mass, or 0.4 to 5 parts by mass with respect to 100 parts by mass of the water-soluble ethylenically unsaturated monomer. The thickener makes it possible to control the dispersion state of the aqueous solution in the suspension. Specifically, in a case where the aqueous solution does not contain a thickener or contains a thickener having a low viscosity, the aqueous solution is easily dispersed as compared with a case where the aqueous solution contains a thickener having a high viscosity, and thus it is easy to obtain water-absorbent resin particles having a small particle diameter, that is, a large specific surface area and having an increased water absorption rate.

(4) Hydrophilic polymer dispersant

The aqueous solution may contain a hydrophilic polymer dispersant. Examples of the hydrophilic polymer dispersant include polyvinyl alcohol (PVA), polyvinylpyrrolidone (PVP), polyethylene glycol (PEG), polypropylene glycol, a polyethylene glycol-polypropylene glycol block copolymer, polyglycerin, polyoxyethylene glycerin, polyoxypropylene glycerin, a polyoxyethylene-polyoxypropylene glycerin copolymer, and a polyoxyethylene sorbitan fatty acid ester. Among these, the hydrophilic polymer dispersant may be at least one compound selected from the group consisting of polyvinyl alcohol, polyvinylpyrrolidone, polyethylene glycol, polypropylene glycol, and polyglycerin. One kind of the hydrophilic polymer dispersant may be used alone, or two or more kinds thereof may be used in combination.

The amount of the hydrophilic polymer dispersant may be 0.001 to 10 parts by mass, 0.005 to 5 parts by mass, 0.01 to 3 parts by mass, or 0.01 to 1.5 parts by mass with respect to 100 parts by mass of the water-soluble ethylenically unsaturated monomer.

By using the hydrophilic polymer dispersant, it is possible to obtain water-absorbent resin particles of which the surface is modified to be hydrophilic. As a result, the water absorption rate of the water-absorbent resin particles can be increased.

(5) Radical polymerization initiator

The aqueous solution may contain a radical polymerization initiator. As the radical polymerization initiator, an azo-based compound or a peroxide can be used.

Examples of the azo-based compound include 2,2'-azobis[2-(N-phenylamidino)propane]dihydrochloride, 2,2'-azobis{2-[N-(4-chlorophenyl)amidino]propane}dihydrochloride, 2,2'-azobis {2-[N-(4-hydroxyphenyl)amidino]propane} dihydrochloride, 2,2'-azobis[2-(N-benzylamidino)propane]dihydrochloride, 2,2'-azobis[2-(N-allylamidino)propane]dihydrochloride, 2,2'-azobis(2-amidinopropane)dihydrochloride, 2,2'-azobis{2-[N-(2-hydroxyethyl)amidino]propane}dihydrochloride, 2,2'-azobis[2-(5-methyl-2-imidazolin-2-yl)propane]dihydrochloride, 2,2'-azobis[2-(2-imidazolin-2-yl)propane]dihydrochloride, 2,2'-azobis[2-(4,5,6,7-tetrahydro-1H-1,3-diazepin-2-yl)propane]dihydrochloride, 2,2'-azobis[2-(5-hydroxy-3,4,5,6-tetrahydropyrimidin-2-yl)propane]dihydrochloride, 2,2'-azobis{2-[1-(2-hydroxyethyl)-2-imidazolin-2-yl]propane} dihydrochloride, 2,2'-azobis(2-methylpropionamide)dihydrochloride, 2,2'-azobis[2-(2-imidazolin-2-yl)propane]disulfate dihydrate, 2,2'-azobis[N-(2-carboxyethyl)-2-methylpropionamidine]tetrahydrate, and 2,2'-azobis[2-methyl-N-(2-hydroxyethyl)propionamide].

Examples of the peroxide include persulfates such as potassium persulfate, ammonium persulfate, and sodium persulfate; organic peroxides such as methyl ethyl ketone peroxide, methyl isobutyl ketone peroxide, di-t-butyl peroxide, t-butyl cumyl peroxide, t-butyl peroxyacetate, t-butyl peroxyisobutyrate, and t-butyl peroxypivalate; and hydrogen peroxide.

One kind of the radical polymerization initiator may be used alone, or two or more kinds thereof may be used in combination. In a case where two or more radical polymerization initiators are used in combination, the above-described azo-based compound and peroxide can be used in combination. The azo-based compound to be used in combination may be at least one selected from 2,2'-azobis(2-amidinopropane)dihydrochloride, 2,2'-azobis{2-[1-(2-hydroxyethyl)-2-imidazolin-2-yl]propane} dihydrochloride, or 2,2'-azobis[N-(2-carboxyethyl)-2-methylpropionamidine]tetrahydrate. The peroxide to be used in combination may be at least one selected from potassium persulfate, ammonium persulfate, sodium persulfate, or hydrogen peroxide.

The amount of the radical polymerization initiator is, for example, 0.005 to 1 mol with respect to 100 mol of the water-soluble ethylenically unsaturated monomer. In a case where the azo-based compound and a radical polymerization initiator other than the azo-based compound (for example, a peroxide) are used in combination, the ratio of the azo-based compound to the entire radical polymerization initiator may be 10% to 100% by mole, 25% to 90% by mole, 30% to 85% by mole, or 35% to 80% by mole.

The radical polymerization initiator can also be used as a redox polymerization initiator when it is used in combination with a reducing agent such as sodium sulfite, sodium hydrogen sulfite, ferrous sulfate, and L-ascorbic acid.

(6) Chain transfer agent

The aqueous solution may contain a chain transfer agent. Examples of the chain transfer agent include hypophosphites, thiols, thiolic acids, secondary alcohols, and amines.

(7) Foaming agent

The aqueous solution may contain a foaming agent. Examples of the foaming agent include inorganic foaming agents such as ammonium carbonate, sodium bicarbonate, and ammonium bicarbonate, and organic foaming agents such as a nitroso compound such as dinitrosopentamethylenetetramine, an azo compound such as azodicarbonamide or azobis(isobutyronitrile), and a sulfonyl hydrazide compound such as 4,4'-oxybisbenzenesulfonyl hydrazide or p-toluenesulfonyl hydrazide. By using the foaming agent, the specific surface area of the water-absorbent resin particles to be obtained can be increased. As a result, the water absorption rate of the water-absorbent resin particles can be increased.

(8) Metal chelating agent

The aqueous solution may contain a metal chelating agent. Examples of the metal chelating agent include aminocarboxylic acid-based chelating agents such as diethylenetriamine pentaacetate and ethylenediamine-N,N'-disuccinic acid, and phosphonic acid-based chelating agents such as ethylenediaminetetramethylenephosphonic acid and diethylenetriaminepentakis(methylphosphonic acid). By using the metal chelating agent, metal ions in the aqueous solution can be inactivated. As a result, the stability of the polymerization is improved, and thus it is easy to obtain a water-absorbent resin having better water absorption performance. In addition, depolymerization is suppressed, and the residual monomer is likely to be reduced.

[Oily liquid]

The oily liquid is a hydrophobic liquid that is mainly composed of a hydrocarbon dispersion medium. The oily liquid contains a hydrocarbon dispersion medium, and may further contain any additive (for example, a hydrophobic polymer dispersant and/or a surfactant, which will be described later). In the reverse phase suspension polymerization method, an oily liquid is used as a dispersion medium of the aqueous solution.

(1) Hydrocarbon dispersion medium

Examples of the hydrocarbon dispersion medium include chain aliphatic hydrocarbons such as n-hexane, n-heptane, 2-methylhexane, 3-methylhexane, 2,3-dimethylpentane, 3-ethylpentane, and n-octane; alicyclic hydrocarbons such as cyclohexane, methylcyclohexane, cyclopentane, methylcyclopentane, trans-1,2-dimethylcyclopentane, cis-1,3-dimethylcyclopentane, and trans-1,3-dimethylcyclopentane; and aromatic hydrocarbons such as benzene, toluene, and xylene. One kind of the hydrocarbon dispersion medium may be used alone, or two or more kinds thereof may be used in combination.

From the viewpoint of moderately removing the polymerization heat and easily controlling the polymerization temperature, the amount of the hydrocarbon dispersion medium contained in the oily liquid may be 30 to 1,000 parts by mass, 50 to 650 parts by mass, 70 to 550 parts by mass, or 100 to 450 parts by mass with respect to 100 parts by mass of the water-soluble ethylenically unsaturated monomer.

(2) Hydrophobic polymer dispersant

The oily liquid may contain a hydrophobic polymer dispersant. Examples of the hydrophobic polymer dispersant include maleic anhydride-modified polyethylene, maleic anhydride-modified polypropylene, a maleic anhydride-modified ethylene-propylene copolymer, a maleic anhydride-modified EPDM (ethylene propylene diene terpolymer), maleic anhydride-modified polybutadiene, a maleic anhydride-ethylene copolymer, a maleic anhydride-propylene copolymer, a maleic anhydride-ethylene-propylene terpolymer, a maleic anhydride-butadiene copolymer, polyethylene, polypropylene, an ethylene-propylene copolymer, oxidized polyethylene, oxidized polypropylene, an oxidized ethylene-propylene copolymer, an ethylene-acrylic acid copolymer, ethyl cellulose, and ethyl hydroxyethyl cellulose. The hydrophobic polymer dispersant may be used alone, or two or more kinds thereof may be used in combination.

From the viewpoint of better dispersion stability of monomers, the polymeric dispersant may include at least one compound selected from the group consisting of maleic anhydride-modified polyethylene, maleic anhydride-modified polypropylene, a maleic anhydride-modified ethylene-propylene copolymer, a maleic anhydride-ethylene copolymer, a maleic anhydride-propylene copolymer, a maleic anhydride-ethylene-propylene terpolymer, polyethylene, polypropylene, an ethylene-propylene terpolymer, oxidized polyethylene, oxidized polypropylene, and an oxidized ethylene-propylene copolymer.

By using the hydrophobic polymer dispersant, the dispersion state of the aqueous solution in the suspension is likely to be more uniform, and the particle diameter of the water-absorbent resin particles (that is, the specific surface area of the water-absorbent resin particles) is likely to be easily controlled by the stirring speed of the suspension. As a result, it is easy to obtain the water-absorbent resin particles having the above-described moderate water absorption rate. The amount of the hydrophobic polymer dispersant may be 0.05 to 10 parts by mass, 0.08 to 5 parts by mass, or 0.1 to 3 parts by mass with respect to 100 parts by mass of the aqueous solution (monomer aqueous solution).

(3) Surfactant

The oily liquid may contain a surfactant. The HLB of the surfactant may be 1 to 16, 2 to 12, or 3 to 10.5. In a case where the HLB of the surfactant is within the above-mentioned range, it is easy to control the dispersion state of the aqueous solution in the suspension, and thus it is easy to control the shape and the particle diameter of the water-absorbent resin particles. As a result, it is easy to obtain the water-absorbent resin particles having the above-described moderate water absorption rate.

Examples of the surfactant include nonionic surfactants such as a sorbitan fatty acid ester, a (poly)glycerin fatty acid ester, a sucrose fatty acid ester, a polyoxyethylene sorbitan fatty acid ester, a polyoxyethylene glycerin fatty acid ester, a sorbitol fatty acid ester, a polyoxyethylene sorbitol fatty acid ester, a polyoxyethylene alkyl ether, a polyoxyethylene alkyl phenyl ether, a polyoxyethylene castor oil, a polyoxyethylene hydrogenated castor oil, an alkylallyl formaldehyde condensed polyoxyethylene ether, a polyoxyethylene polyoxypropylene block copolymer, a polyoxyethylene polyoxypropylene alkyl ether, and polyethylene glycol fatty acid ester; and anionic surfactants such as a fatty acid salt, an alkylbenzene sulfonate, an alkylmethyl taurinate, a polyoxyethylene alkyl phenyl ether sulfuric acid ester salt, a polyoxyethylene alkyl ether sulfonate, a polyoxyethylene alkyl ether phosphoric acid salt, and a polyoxyethylene alkyl allyl ether phosphoric acid salt.

Among these, at least one compound selected from the group consisting of a sorbitan fatty acid ester, a polyglycerin fatty acid ester, and a sucrose fatty acid ester can be used since it is easy to control the dispersion state of the aqueous solution in the suspension. By using a sorbitan fatty acid ester, the aqueous solution in the suspension is likely to be subjected to aggregation. As a result, it is easy to obtain granular water-absorbent resin particles having a large specific surface area, and the water absorption rate can be adjusted to be fast. On the other hand, by using a sucrose fatty acid ester, the aqueous solution in the suspension is easily dispersed stably. As a result, it is easy to obtain water-absorbent resin particles having a true spherical shape (having a small specific surface area), and the water absorption rate can be adjusted to be slow.

<Details of manufacturing method>

[Preparation step]

The preparation step is a step of preparing each of the above-mentioned oily liquid and the above-mentioned aqueous solution and mixing the oily liquid and the aqueous solution to prepare a suspension for polymerization. By adding the above-mentioned surfactant to the oily liquid and/or the aqueous solution, a suspension containing the surfactant can be prepared.

[Polymerization step]

The polymerization step is a step of carrying out a polymerization reaction by heating the suspension prepared in the preparation step. The polymerization temperature (the temperature of the suspension) is, for example, 20°C to 110°C or 40°C to 90°C. The polymerization time is, for example, 0.5 to 4 hours. In the polymerization step, the water-soluble ethylenically unsaturated monomer is polymerized to generate a particulate hydrogel-like polymer.

[Intermediate crosslinking step]

The manufacturing method for the water-absorbent resin particles according to the present disclosure may include an intermediate crosslinking step of crosslinking the hydrogel-like polymer. The intermediate crosslinking of the hydrogel-like polymer is carried out, for example, by mixing the hydrogel-like polymer with an intermediate crosslinking agent and heating the resultant mixture. As the intermediate crosslinking agent, the same one as the above-described internal crosslinking agent can be used.
The amount of the intermediate crosslinking agent may be 0.0001 to 0.03 mol, 0.0005 to 0.02 mol, or 0.001 to 0.01 mol with respect to 100 mol of the water-soluble ethylenically unsaturated monomer that is used for producing the hydrogel-like polymer.
The reaction temperature of the intermediate crosslinking reaction may be 60°C or higher or 70°C or higher, and it may be equal to or lower than the boiling point of the hydrocarbon dispersion medium. The reaction time of the intermediate crosslinking reaction varies depending on the reaction temperature, the kind and mixing amount of the intermediate crosslinking agent, and the like, and thus cannot be determined unconditionally; however, it is usually 1 to 200 minutes, 5 to 100 minutes, or 10 to 60 minutes. The intermediate crosslinking makes it possible to improve the crosslinking density inside the hydrogel-like polymer and to control the water retention ability and the water absorption amount under a load.
The polymerization step can be carried out in one stage or in multiple stages of two or more stages. In a case where reverse phase suspension polymerization method is carried out in multiple stages of two or more stages, a first stage reverse phase suspension polymerization method is carried out, an ethylenically unsaturated monomer is mixed with the reaction mixture obtained in the first polymerization reaction, and second and subsequent stages of reverse phase suspension polymerization method may be carried out in the same method as the first stage. In the reverse phase suspension polymerization method in each stage after the second stage, the reverse phase suspension polymerization method may be carried out by adding, in addition to the ethylenically unsaturated monomer, the above-described radical polymerization initiator and/or various additives within a range of the ratio of each of the components to the ethylenically unsaturated monomer, based on the amount of the ethylenically unsaturated monomer added during the reverse phase suspension polymerization method in each stage after the second stage. By carrying out the polymerization step in multiple stages of two or more stages, the hydrogel-like polymer can be aggregated to change the specific surface area thereof, and the water absorption rate of the water-absorbent resin particles can be controlled.

[Particle diameter adjustment step]

The manufacturing method for the water-absorbent resin particles according to the present disclosure may include a particle diameter adjustment step. The particle diameter adjustment step can be carried out, for example, by adding a flocculant such as a powdered inorganic flocculant to the inside of the system. By adding a flocculant, the particle diameter of the water-absorbent resin particles to be obtained can be increased, that is, the specific surface area can be decreased. As a result, the water absorption rate of the water-absorbent resin particles to be obtained can be controlled to be slow.
Examples of the powdered inorganic flocculant include amorphous silica, zeolite, bentonite, aluminum oxide, talc, titanium dioxide, kaolin, clay, and hydrotalcite. From the viewpoint of the high flocculation effect, the powdered inorganic flocculant may include at least one selected from the group consisting of amorphous silica, aluminum oxide, talc, and kaolin.

In a case where a flocculant is added to the inside of the system, the timing of the addition of the flocculant is, for example, between the above-mentioned polymerization step and a drying step described later, and/or between the above-mentioned intermediate crosslinking step and a surface crosslinking step described later. The amount of the flocculant may be 0.001 to 1 part by mass, 0.005 to 0.5 parts by mass, or 0.01 to 0.2 parts by mass with respect to 100 parts by mass of the water-soluble ethylenically unsaturated monomer.

The particle diameter of the water-absorbent resin particles can be also adjusted by controlling the dispersion state of the suspension in the polymerization step. That is, the particle diameter adjustment step can also be carried out during the polymerization step. The dispersion state of the suspension is controlled, for example, by adjusting the rotation speed of the stirrer. For example, in the polymerization step, the particle diameter of the water-absorbent resin particles can be reduced, that is, the specific surface area can be controlled to be large by increasing the rotation speed of the stirring device, and the water absorption rate of the water-absorbent resin particles to be obtained can be increased. By reducing the rotation speed of the stirring device, the particle diameter of the water absorbent resin particles can be controlled to be large, and the water absorption rate of the water-absorbent resin particles to be obtained can be also controlled to be slow.

[Surface crosslinking step]

The manufacturing method for the water-absorbent resin particles according to the present disclosure may include a surface crosslinking step of crosslinking the surface of the above-mentioned hydrogel-like polymer. By subjecting the hydrogel-like polymer to surface crosslinking, the water absorption amount of the obtained water-absorbent resin particles under a load can be increased. Specifically, the crosslinking state of the surface of the hydrogel-like polymer can be adjusted and the water absorption amount under a load can be controlled by adjusting the water content of the hydrogel-like polymer that is subjected to the surface crosslinking step and the kind and amount of the surface crosslinking agent that is used in the surface crosslinking step. Specifically, the water absorption amount under a load can be increased by increasing the crosslinking density on the surface of the hydrogel-like polymer by the surface crosslinking step.

In a case where the surface crosslinking step is carried out, a pre-drying step of previously adjusting the water content of the hydrogel-like polymer that is subjected to the surface crosslinking step may be provided. Examples of the drying method in the pre-drying step include (a) a method of heating a hydrogel-like polymer from the outside in a state where the hydrogel-like polymer is dispersed in an oily liquid, thereby removing water by refluxing a hydrocarbon dispersion medium contained in the oily liquid due to azeotropic distillation, (b) a method of extracting the hydrogel-like polymer by decantation and drying the extracted hydrogel-like polymer under reduced pressure, and (c) a method of filtering the hydrogel-like polymer with a filter and drying the filtered hydrogel-like polymer under reduced pressure. The method (a) can be adopted due to the simplicity in the production process.

The water content of the hydrogel-like polymer that is subjected to the surface crosslinking step may be 5% to 130% by mass, 10% to 110% by mass, 10% to 90% by mass, 10% to 80% by mass, or 15% to 60% by mass. The water content of the hydrogel-like polymer can be obtained by calculating, as the water amount of the hydrogel-like polymer, a value obtained by adding a water amount to be used as necessary in a case of mixing the surface crosslinking agent, to an amount (a water amount of the hydrogel-like polymer after the pre-drying step) obtained by subtracting a water amount extracted to the outside by the pre-drying step from a water amount contained in the aqueous solution before polymerization, and calculating a ratio of the water amount of the hydrogel-like polymer to the mass of the water-soluble ethylenically unsaturated monomer component constituting the above-mentioned hydrogel-like polymer.

The surface crosslinking of the hydrogel-like polymer is carried out, for example, by mixing the hydrogel-like polymer with a surface crosslinking agent and heating the resultant mixture. The mixing amount of the surface crosslinking agent may be, for example, 0.0001 to 1 mol, 0.0005 to 0.5 mol, 0.001 to 0.1 mol, or 0.005 to 0.05 mol with respect to 100 mol of the water-soluble ethylenically unsaturated monomer that is used for producing the hydrogel-like polymer.

In a case of mixing the hydrogel-like polymer with a surface crosslinking agent, water and/or a hydrophilic organic solvent can be used as a solvent for the surface crosslinking agent in order to uniformly disperse the surface crosslinking agent. Examples of the hydrophilic organic solvent include lower alcohols such as methyl alcohol, ethyl alcohol, and isopropyl alcohol, ketones such as acetone and methyl ethyl ketone, ethers such as dioxane and tetrahydrofuran, amides such as N,N-dimethylformamide, and sulfoxides such as dimethyl sulfoxide. One kind of the solvent for the surface crosslinking agent may be used alone, or two or more kinds thereof may be used in combination.

The reaction temperature of the surface crosslinking reaction may be, for example, 60°C to 200°C or 80°C to 150°C. In a case where the reaction temperature is 60°C or higher, the surface crosslinking reaction is promoted, and the reaction tends not to take an excessive time. In a case where the reaction temperature is 200°C or lower, the deterioration of the water-absorbent resin particles to be obtained tends to be suppressed, and the reduction of the water absorption perfonnance tends to be suppressed. The reaction time of the surface crosslinking reaction varies depending on the reaction temperature, the kind and amount of the surface crosslinking agent, and the like, and thus cannot be determined unconditionally; however, it may be 1 to 300 minutes or 5 to 200 minutes.

[Drying step]

The drying step is a step of applying energy such as heat from the outside to the hydrogel-like polymer obtained through the above-described steps to remove water, the hydrocarbon dispersion medium, and the like, thereby obtaining polymer particles. As a drying method that can be used in the present step, the same method as the pre-drying step that can be carried out before the above-mentioned surface crosslinking step can be adopted. In a case where the above-mentioned surface crosslinking step is carried out, the surface crosslinking step may also serve as the drying step.

[Addition step]

The manufacturing method for the water-absorbent resin particles according to the present disclosure may include an addition step of adding an additive to the polymer particles. Examples of the additive include a lubricating agent, a metal chelating agent, a surface modifier, a heat resistance stabilizer, an antioxidant, and an antibacterial agent.

Examples of the lubricating agent include amorphous silica. Examples of the metal chelating agent include ethylenediamine tetraacetate and a salt thereof (sodium ethylenediamine tetraacetate or the like), and diethylenetriamine pentaacetate and a salt thereof (pentasodium diethylenetriamine pentaacetate or the like). Examples of the surface modifier include polyvalent metal compounds such as aluminum sulfate, potassium alum, ammonium alum, sodium alum, and (poly)aluminum chloride, and a hydrate thereof; and polycationic compounds such as polyethyleneimine, polyvinyl amine, and polyallyl amine. The water wetting of the polymer particles can be controlled to some extent depending on the degree of hydrophilicity of the surface modifier, and as a result, the water absorption rate can be controlled.

The additive may be disposed on and/or inside the surface of the polymer particles. For example, the additive can be disposed on the surface of the polymer particles by mixing the polymer particles with the additive, and the additive can be disposed inside the polymer particles by adding the additive to the above-described suspension (aqueous solution and/or oily liquid) and then using the suspension in the polymerization step.

The amount of the additive may be, for example, 0.001 to 10 parts by mass, 0.01 to 5 parts by mass, or 0.1 to 2 parts by mass with respect to 100 parts by mass of the polymer particles.

In a case where the present addition step is not carried out, the polymer particles obtained through the above-mentioned drying step are the water absorbent resin particles according to the present disclosure.

[Absorbent article]

The absorbent article according to the present disclosure contains the above-described water-absorbent resin particles according to the present disclosure. By using the water-absorbent resin particles according to the present disclosure for an absorbent article for nursing care, the amount of return and the diffusion area of the absorbent article can be suppressed, and thus better feeling of use can be realized. The absorbent article usually includes an absorber that exhibits a water absorption function and a protective member that protects the absorber.

(1) Absorber

The absorber may include a resin layer containing the water-absorbent resin particles according to the present disclosure and a hydrophilic fiber layer containing any hydrophilic fiber. In a case where the absorber includes a hydrophilic fiber layer, the resin layer and the hydrophilic fiber layer may be independent and separate layers, or the resin layer and the hydrophilic fiber layer may be completely integrated. In other words, the water-absorbent resin particles and the hydrophilic fibers may be mixed with each other over the entire absorber. Examples of the structure of the absorber include a structure in which a resin layer containing a water-absorbent resin is held on an upper side and/or a lower side of one hydrophilic fiber layer, a mixing structure in which water-absorbent resin particles and hydrophilic fibers are uniformly mixed, and a sandwich structure in which a resin layer containing water-absorbent resin particles is held between a plurality of hydrophilic fiber layers.

Examples of the hydrophilic fiber include cellulose fibers such as cotton pulp and chemical pulp, and artificial cellulose fibers such as rayon and acetate. The absorber may further include, as a reinforcing agent, synthetic fibers made of a synthetic resin such as polyamide, polyester, or polyolefin.

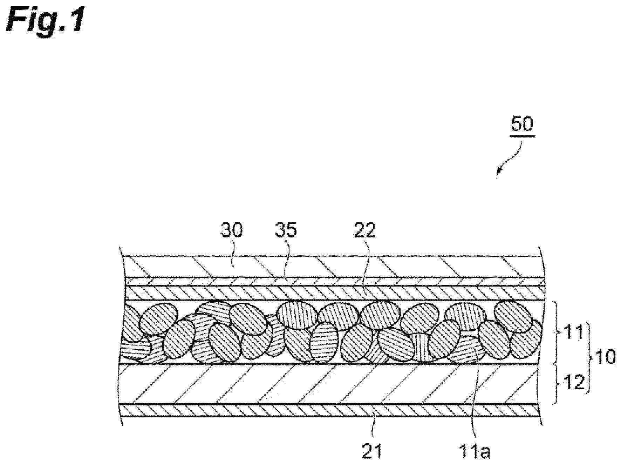

Fig. 1 is a partial cross-sectional view showing an example of an absorbent article. An absorbent article 50 shown in Fig. 1 includes a sheet shaped absorber 10, a first shape retaining member 21, a second shape retaining member 22, a protective member 30, and an adhesive 35. The absorber 10 is a laminate composed of one resin layer 11 including a plurality of water-absorbent resin particles 11a and one hydrophilic fiber layer 12 including a hydrophilic fiber. The absorber 10 is disposed between the sheet shaped first shape retaining member 21 and the sheet shaped second shape retaining member 22. The entire absorber 10 may be wrapped by the first shape retaining member 21 and the second shape retaining member 22. The first shape retaining member 21 and the second shape retaining member 22 may be one sheet or may be two separate sheets. The first shape retaining member 21 and the second shape retaining member 22 may be, for example, a tissue. The adhesive 35 is interposed between the sheet shaped protective member 30 and the second shape retaining member 22. The adhesive 35 may be, for example, a hot melt adhesive.

The amount of the water-absorbent resin particles according to the present disclosure in the absorber may be, for example, 5% to 80% by mass, 10% to 70% by mass, 15% to 65% by mass, or 30% to 65% by mass based on the mass of the absorber (or the total amount of the hydrophilic fiber and the water-absorbent resin particles).

(2) Protective member

The protective member may be, for example, a sheet shaped member (liquid permeable sheet) having water permeability. Examples of the liquid permeable sheet include a nonwoven fabric made of a synthetic resin such as polyethylene, polypropylene, polyester, or polyamide, a porous synthetic resin sheet, and a tissue. One kind of the protective member may be used alone, or two or more kinds thereof may be used in combination.

In the absorbent article according to the present disclosure, the weight per area of the water-absorbent resin particles may be 10 to 300 $g/m^2$, 10 to 200 $g/m^2$, 10 to 150 $g/m^2$, 50 to 100 $g/m^2$, 50 to 90 $g/m^2$, 50 to 80 $g/m^2$, 60 to 100 $g/m^2$, 60 to 90 $g/m^2$, 60 to 80 $g/m^2$, 70 to 100 $g/m^2$, 70 to 90 $g/m^2$, or 70 to 80 $g/m^2$. In a case where the absorbent article includes a hydrophilic fiber layer, the weight per area thereof may be 20 to 70 $g/m^2$, 20 to 60 $g/m^2$, 20 to 50 $g/m^2$, 30 to 70 $g/m^2$, 30 to 60 $g/m^2$, 30 to 50 $g/m^2$, 40 to 70 $g/m^2$, 40 to 60 $g/m^2$, or 40 to 50 $g/m^2$. Here, the weight per area means the mass per unit area of the absorbent article in a case of being viewed from the thickness direction of the absorbent article.

The amount of return of the absorbent article according to the present disclosure may be 0.001 to 5.0 g, 0.001 to 4.0 g, 0.001 to 3.0 g, 0.001 to 2.0 g, 0.001 to 1.0 g, 0.001 to 0.1 g, 0.01 to 5.0 g, 0.01 to 4.0 g, 0.01 to 3.0 g, 0.01 to 2.0 g, 0.01 to 1.0 g, 0.01 to 0.1 g, 0.1 to 5.0 g, 0.1 to 4.0 g, 0.1 to 3.0 g, 0.1 to 2.0 g, 0.1 to 1.0 g, 0.5 to 5.0 g, 0.5 to 4.0 g, 0.5 to 3.0 g, 0.5 to 2.0 g, or 0.5 to 1.0 g.

A specific measuring method for the above-mentioned amount of return is as described in Examples described later.

The diffusion area of the absorbent article according to the present disclosure may be 10 to 220 $cm^2$, 10 to 200 $cm^2$, 10 to 180 $cm^2$, 10 to 160 $cm^2$, 10 to 140 $cm^2$, 10 to 120 $cm^2$, 10 to 110 $cm^2$, 10 to 100 $cm^2$, 10 to 90 $cm^2$, 50 to 220 $cm^2$, 50 to 200 $cm^2$, 50 to 180 $cm^2$, 50 to 160 $cm^2$, 50 to 140 $cm^2$, 50 to 120 $cm^2$, 50 to 110 $cm^2$, 50 to 100 $cm^2$, 50 to 90 $cm^2$, 80 to 220 $cm^2$, 80 to 200 $cm^2$, 80 to 180 $cm^2$, 80 to 160 $cm^2$, 80 to 140 $cm^2$, 80 to 120 $cm^2$, 80 to 110 $cm^2$, 80 to 100 $cm^2$, 80 to 90 $cm^2$, 90 to 220 $cm^2$, 90 to 200 $cm^2$, 90 to 180 $cm^2$, 90 to 160 $cm^2$, 90 to 140 $cm^2$, 90 to 120 $cm^2$, 90 to 110 $cm^2$, 90 to 100 $cm^2$, 100 to 220 $cm^2$, 100 to 200 $cm^2$, 100 to 180 $cm^2$, 100 to 160 $cm^2$, 100 to 140 $cm^2$, 100 to 120 $cm^2$, or 100 to 110 $cm^2$.

A specific measuring method for the above-mentioned diffusion area is as described in Examples described later.

According to the findings obtained from the diligent studies by the inventors of the present invention, there is a threshold value at which the feeling of use of the absorbent article dramatically changes in both the amount of return and the diffusion area of the absorbent article. In a case where the amount of return was 1.0 g or less, the feeling of use was dramatically improved; however, the improvement of the feeling of use was slight even in a case where the amount of return was further decreased. This is presumed to be because the human body is not sensitive enough to sense a slight difference in the amount of return in the vicinity of the urination part. In a case where the diffusion area exceeds 220 $cm^2$, the urine easily reaches a more sensitive portion such as the waist beyond the vicinity of the urination part, and thus the feeling of use is rapidly deteriorated. In a case where the diffusion area is 220 $cm^2$ or less, the feeling of use is gradually improved. However, in a case where the diffusion area is less than 90 $cm^2$, the feeling of use is slightly deteriorated, and in a case where the diffusion area is less than 70 $cm^2$, the feeling of use is deteriorated although it is improved as compared with a case where the diffusion area is more than 220 $cm^2$. This is considered to be because, in a case where the diffusion area is too narrow, the swelling of the water-absorbent resin particles causes a large difference in the height between the water-absorbent portion and the other portions of the absorbent article.

The water-absorbent resin particles and the absorbent article according to the present disclosure can be used not only as a waterproof sheet for nursing care but also in fields such as paper diapers, sanitary napkins, tampons, and pet sheets.

Examples

Hereinafter, the present invention will be more specifically described with reference to examples. However, the present invention is not limited to these examples.

[Manufacturing Example 1]

A round-bottomed cylindrical separable flask having 4 side wall baffles (baffle width: 7 mm, baffle length: 10 cm), with an inner diameter of 11 cm and an internal volume of 2 L, equipped with a reflux cooling device, a dropping funnel, a nitrogen gas introduction tube, and a stirrer (a stirrer blade having two stages of four inclined paddle blades with a blade diameter of 5 cm (those surface-treated with fluororesin)) was prepared. Into this flask, 472.30 g of n-heptane as a hydrocarbon dispersion medium was added, and 1.104 g of sorbitan monolaurate (NONION LP-20R, HLB value: 8.6, manufactured by NOF CORPORATION) was added as a surfactant to obtain a mixture. The sorbitan monolaurate was dissolved in n-heptane by raising the temperature of this mixture to 50°C while carrying out stirring with a stirrer at a rotation speed of 700 rpm. Thereafter, the mixture was cooled to 45°C.

Subsequently, 92.0 g of an aqueous solution having a concentration of 80.5% by mass acrylic acid (acrylic acid: 1.03 mol) was placed in a triangular flask having an internal volume of 500 mL. Subsequently, while cooling the flask with ice from the outside, 147.7 g of an aqueous solution of sodium hydroxide having a concentration of 20.9% by mass was added dropwise into the flask to neutralize 75% by mole of acrylic acid, whereby an aqueous solution of a partially neutralized product of acrylic acid was obtained. Subsequently, 0.1012 g (0.374 mmol) of potassium persulfate as a water-soluble radical polymerization initiator was dissolved in the aqueous solution of the partially neutralized product of acrylic acid to prepare a monomer aqueous solution.

After adding the above-described monomer aqueous solution to the above-described separable flask, the inside of the system was sufficiently replaced with nitrogen. Thereafter, while carrying out stirring with a stirrer at a rotation speed of 700 rpm, the flask was immersed in a water bath at 70°C, and this state was held for 60 minutes to carry out the polymerization, whereby a hydrogel-like polymer was obtained. Thereafter, 0.41 g of an aqueous solution of ethylene glycol diglycidyl ether having a concentration of 2% by mass (ethylene glycol diglycidyl ether: 0.047 mmol) was added as an intermediate crosslinking agent to the inside of the system and mixed for 30 minutes with a polymerization solution containing the hydrogel-like polymer.

Thereafter, while carrying out stirring with a stirrer at a rotation speed of 1,000 rpm, a dispersion liquid obtained by previously dispersing 0.0138 g of amorphous silica (Oriental Silicas Corporation, Tokusil NP-S) to 100 g of n-heptane was added to a polymerization solution containing the produced hydrogel-like polymer, n-heptane, and a surfactant as a powdered inorganic flocculant, and the reaction solution (polymerization solution) was stirred for 10 minutes. Thereafter, the flask containing the reaction solution was immersed in an oil bath at 125°C, and 104.08 g of water was extracted to the outside of the system while refluxing n-heptane by azeotropic distillation of n-heptane and water.

Thereafter, 4.14 g of an aqueous solution of ethylene glycol diglycidyl ether having a concentration of 2% by mass (ethylene glycol diglycidyl ether: 0.48 mmol) was added as a surface crosslinking agent, and subsequently, the internal temperature was maintained at 83°C ± 2°C for 2 hours. Thereafter, the separable flask was heated in an oil bath at 125°C, and water and n-heptane were evaporated until almost no evaporated products were distilled off from the inside of the system, whereby a dried product of polymer particles was obtained. The dried product was allowed to pass through a sieve having an opening of 850 μm, to obtain 82.60 g of water-absorbent resin particles A. Table 1 shows the physical property values of the water-absorbent resin particles of Manufacturing Example 1.

[Manufacturing Example 2]

<First stage polymerization reaction>

A round-bottomed cylindrical separable flask was prepared, which had an inner diameter of 11 cm and a capacity of 2 L, and was equipped with a reflux cooling device, a dropping funnel, a nitrogen gas introduction tube, and as a stirrer, a stirring blade having four inclined paddle blades, each having a blade diameter of 5 cm, in a two-tier manner. Into this flask, 293 g of n-heptane was put as a hydrocarbon dispersion medium, and 0.736 g of a maleic anhydride-modified ethylene-propylene copolymer (manufactured by Mitsui Chemicals, Inc., Hi-Wax 1105A) was added as a hydrophobic polymer dispersant to obtain a mixed liquid. While carrying out stirring the mixed liquid with a stirrer at a rotation speed of 300 rpm, the temperature of the mixed liquid was raised to 80°C to dissolve the dispersant in n-heptane. Thereafter, the mixture was cooled to 50°C.

92.0 g of an aqueous solution of acrylic acid having a concentration of 80.5% by mass (acrylic acid: 1.03 mol) was placed in a beaker having an internal volume of 300 mL. While cooling the flask with ice from the outside, 147.7 g of an aqueous solution of sodium hydroxide having a concentration of 20.9% by mass was added dropwise into the flask to neutralize 75% by mole of acrylic acid, whereby an aqueous solution of a partially neutralized acrylic acid was obtained. 0.092 g of hydroxylethyl cellulose (HEC AW-15F, manufactured by Sumitomo Seika Chemicals Co., Ltd.) as a thickener, 0.0736 g (0.272 mmol) of potassium persulfate as a water-soluble radical polymerization initiator, and 0.010 g (0.057 mmol) of ethylene glycol diglycidyl ether as an internal crosslinking agent were dissolved in the aqueous solution of the partially neutralized acrylic acid, whereby a first stage monomer aqueous solution was prepared.

The first stage monomer aqueous solution was added to a separable flask and stirred with a stirrer at a rotation speed of 300 rpm for 10 minutes. Thereafter, a surfactant solution, which was obtained by dissolving 0.736 g of sucrose stearic acid ester having an HLB of 3 (Mitsubishi-Chemical Foods Corporation, Ryoto Sugar Ester S-370) as a surfactant in 6.62 g of n-heptane, was further added. While carrying out stirring with a stirrer by setting the rotation speed to 550 rpm, the inside of the system was sufficiently replaced with nitrogen. Then, the flask was immersed in a water bath at 70°C, and this state was held for 60 minutes to carry out polymerization, whereby a first stage polymerization slurry was obtained.

<Second stage polymerization reaction>

128.8 g of an aqueous solution of acrylic acid having a concentration of 80.5% by mass (acrylic acid: 1.44 mol) was placed in a beaker having an internal volume of 500 mL as a water-soluble ethylenically unsaturated monomer. Subsequently, while cooling the flask with ice from the outside, 159.0 g of an aqueous solution of sodium hydroxide having a concentration of 27% by mass was added dropwise into the flask to neutralize 75% by mole of acrylic acid, whereby an aqueous solution of a partially neutralized acrylic acid was obtained. Subsequently, 0.090 g (0.333 mmol) of potassium persulfate as a water-soluble radical polymerization initiator, and 0.0116 g (0.067 mmol) of ethylene glycol diglycidyl ether as an internal crosslinking agent were dissolved in the aqueous solution of the partially neutralized acrylic acid, whereby a second stage monomer aqueous solution was prepared.

While carrying out stirring with a stirrer by setting the rotation speed to 1,000 rpm, the inside of the system of the above-mentioned separable flask system was cooled to 25°C, and then the total amount of the above-mentioned second stage monomer aqueous solution was added to the first stage polymerization slurry solution. The inside of the system was replaced with nitrogen for 30 minutes. Then, the flask was immersed again in a water bath at 70°C, and this state was held for 60 minutes to carry out polymerization, whereby a hydrogel-like polymer was obtained.

After the polymerization, 0.589 g of an aqueous solution of pentasodium diethylenetriamine pentaacetate having a concentration of 45% by mass was added to the obtained hydrogel-like polymer under stirring. Thereafter, the flask was immersed in an oil bath set at 125°C, and 256.8 g of water was extracted to the outside of the system while n-heptane was refluxed by azeotropic distillation of n-heptane and water.

Thereafter, 4.42 g of an aqueous solution of ethylene glycol diglycidyl ether having a concentration of 2% by mass (ethylene glycol diglycidyl ether: 0.507 mmol) was added as a surface crosslinking agent to the flask, and the internal temperature was maintained at 83°C ± 2°C for 2 hours. Thereafter, the separable flask was heated in an oil bath at 125°C, and water and n-heptane were evaporated until almost no evaporated products were distilled off from the inside of the system, whereby a dried product was obtained. This dried product was allowed to pass through a sieve having an opening of 850 μm to obtain polymer particles. Amorphous silica (Oriental Silicas Corporation, Tokusil NP-S) having a concentration of 0.5% by mass with respect to the mass of the polymer particles was mixed with the polymer particles to obtain 230.2 g of water-absorbent resin particles B containing the amorphous silica. Table 1 shows the physical property values of the water-absorbent resin particles of Manufacturing Example 2.

[Manufacturing Example 3]

229.0 g of the water-absorbent resin particles B containing amorphous silica was obtained in the same manner as in Manufacturing Example 2, except that 0.092 g (0.339 mmol) of 2,2'-azobis(2-amidinopropane)dihydrochloride and 0.018 g (0.067 mmol) of potassium persulfate were used as a water-soluble radical polymerization initiator used in the polymerization reaction in the first stage, that 0.0046 g (0.026 mmol) of ethylene glycol diglycidyl ether was used as an internal crosslinking agent used in the polymerization reaction in the first stage, that 0.129 g (0.475 mmol) of 2,2'-azobis(2-amidinopropane)dihydrochloride and 0.026 g (0.096 mmol) of potassium persulfate were used as a water-soluble radical polymerization initiator used in the second stage polymerization reaction, that the amount of water extracted to the outside of the system during azeotropic distillation was set to 216.7 g, and that the amount of noncrystalline silica added to the polymer particles was set to 0.2% by mass. Table 1 shows the physical property values of the water-absorbent resin particles of Manufacturing Example 3.

[Manufacturing Example 4]

233.2 g of the water-absorbent resin particles B containing amorphous silica was obtained in the same manner as in Manufacturing Example 2, except that the inside of the system of the separable flask was cooled to 44°C before the total amount of the second stage monomer aqueous solution was added to the first stage polymerization slurry solution before the addition, that the amount of water extracted to the outside of the system during azeotropic distillation was set to 275.8 g, and that the amount of noncrystalline silica added to the polymer particles was set to 0.2% by mass. Table 1 shows the physical property values of the water-absorbent resin particles of Manufacturing Example 4.

[Manufacturing Example 5]

82.96 g of the water-absorbent resin particles A was obtained in the same manner as in Manufacturing Example 1, except that the mixture of the hydrocarbon dispersion medium and the surfactant was stirred with a stirrer at a rotation speed of 1,000 rpm, that the monomer aqueous solution was stirred with a stirrer at a rotation speed of 1,000 rpm, and that the amount of water extracted to the outside of the system during azeotropic distillation was set to 103.26 g. Table 1 shows the physical property values of the water-absorbent resin particles of Manufacturing Example 5.

[Manufacturing Example 6]

85.60 g of the water-absorbent resin particles A was obtained in the same manner as in Manufacturing Example 1, except that 451.4 g of n-heptane was used as a hydrocarbon dispersion medium, that 1.288 g of sorbitan monolaurate was used as a surfactant, that the mixture was stirred at 300 rpm, that the mixture after the dissolution was cooled to 40°C, that 0.092 g of amorphous silica was used as a powdered inorganic flocculant, that the amount of water extracted to the outside of the system during azeotropic distillation was set to 104.02 g, and that 8.28 g of an aqueous solution of ethylene glycol diglycidyl ether having a concentration of 2% by mass was used as a surface crosslinking agent. Table 1 shows the physical property values of the water-absorbent resin particles of Manufacturing Example 6.

[Table 1]

|  | Water absorption rate (second) | Water retention ability (g/g) | Water absorption amount under load (mL/g) | Medium particle diameter ($\mu$m) |
|---|---|---|---|---|
| Manufacturing Example 1/A | 3 | 38 | 13 | 350 |
| Manufacturing Example 2/B | 34 | 42 | 33 | 360 |
| Manufacturing Example 3/B | 54 | 43 | 34 | 370 |
| Manufacturing Example 4/B | 19 | 55 | 21 | 160 |
| Manufacturing Example 5/A | 2 | 35 | 22 | 440 |
| Manufacturing Example 6/A | 4 | 18 | 23 | 400 |

Water-absorbent resin particles and absorbent articles according to Examples and Comparative Examples were manufactured using the water-absorbent resin particles obtained in each of the manufacturing examples, and the physical properties thereof were evaluated.

[Example 1]

<Production of water-absorbent resin particles>

0.2 g of the water-absorbent resin particles manufactured in Manufacturing Example 1 and 2.8 g of the water-absorbent resin particles manufactured in Manufacturing Example 2 were uniformly mixed to obtain water-absorbent resin particles of Example 1. Table 2 shows the physical property values of the water-absorbent resin particles of Example 1.

<Production of absorbent article>

A first shape retaining member (tissue paper) having a weight per area of 16 g/m$^2$, which had a size of 20 cm $\times$ 60 cm, was prepared. 5.4 g of hydrophilic fibers (pulverized pulp) that had been uniformly mixed by air formation using an airflow type mixing device (manufactured by OTEC Co., Ltd., pad former) was laminated on the first shape retaining member to form a hydrophilic fiber layer over the entire upper surface of the first shape retaining member, whereby a laminate was obtained. After cutting off a region located 10 cm inside from both end parts of the laminate in the longitudinal direction, the laminate was divided into two parts to obtain two laminates having a size of 20 cm $\times$ 20 cm.

The water-absorbent resin particles (3.0 g) of Example 1 were uniformly scattered on the hydrophilic fiber layer of the laminate to form a resin layer. A second shape retaining member (tissue paper) having a weight per area of 16 g/m$^2$, which had a size of 20 cm $\times$ 20 cm, was laminated on the formed resin layer to produce an absorber in which the first shape retaining member, the hydrophilic fiber layer, the resin layer, and the second shape retaining member were laminated in this order from the bottom.

After applying a load of 424 kPa to the absorber for 30 seconds, an air-through nonwoven fabric (manufactured by Rengo Co., Ltd., 21 g/m$^2$) having a size of 20 cm × 20 cm, which was coated with a hot melt adhesive, was laminated as a protective member on the second shape retaining member to obtain an absorbent article. The air-through nonwoven fabric was previously coated with 0.1 g of a hot melt adhesive (Henkel Japan Co., Ltd., ME-765E) in a spiral stripe pattern including 20 rows at intervals of 10 mm by using a hot melt coating machine (HALLYS Corporation, pump: Marshal 150, table: XA-DT, tank set temperature: 150°C, hose set temperature: 165°C, gun head set temperature: 170°C). In the obtained absorbent article, the weight per area of the water-absorbent resin particles was 75 g/m$^2$, and the weight per area of the hydrophilic fibers (pulverized pulp) was 45 g/m$^2$. The amount of return and the diffusion area of the absorbent article of Example 1 were measured by a measuring method described later. The measurement results are shown in Table 2.

[Example 2]

<Production of water-absorbent resin particles>

3.0 g of the water-absorbent resin particles produced in Manufacturing Example 4 was used as they were as the water-absorbent resin particles of Example 2.

<Production of absorbent article>

An absorbent article was produced in the same manner as in Example 1, except that the water-absorbent resin particles of Example 2 were used. The amount of return and the diffusion area of the absorbent article of Example 2 were measured. The measurement results are shown in Table 2.

[Example 3]

<Production of water-absorbent resin particles>

0.4 g of the water-absorbent resin particles manufactured in Manufacturing Example 1 and 2.6 g of the water-absorbent resin particles manufactured in Manufacturing Example 2 were uniformly mixed to obtain water-absorbent resin particles of Example 3. Table 2 shows the physical property values of the water-absorbent resin particles of Example 3.

<Production of absorbent article>

An absorbent article was produced in the same manner as in Example 1, except that the water-absorbent resin particles of Example 3 were used. The amount of return and the diffusion area of the absorbent article of Example 3 were measured. The measurement results are shown in Table 2.

[Example 4]

<Production of water-absorbent resin particles>

0.75 g of the water-absorbent resin particles manufactured in Manufacturing Example 1 and 2.25 g of the water-absorbent resin particles manufactured in Manufacturing Example 2 were uniformly mixed to obtain water-absorbent resin particles of Example 4. Table 2 shows the physical property values of the water-absorbent resin particles of Example 4.

<Production of absorbent article>

An absorbent article was produced in the same manner as in Example 1, except that the water-absorbent resin particles of Example 4 were used. The amount of return and the diffusion area of the absorbent article of Example 4 were measured. The measurement results are shown in Table 2.

[Example 5]

<Production of water-absorbent resin particles>

1.5 g of the water-absorbent resin particles manufactured in Manufacturing Example 1 and 1.5 g of the water-absorbent resin particles manufactured in Manufacturing Example 4 were uniformly mixed to obtain water-absorbent resin particles of Example 5. Table 2 shows the physical property values of the water-absorbent resin particles of Example 5.

<Production of absorbent article>

An absorbent article was produced in the same manner as in Example 1, except that the water-absorbent resin particles of Example 5 were used. The amount of return and the diffusion area of the absorbent article of Example 5 were measured. The measurement results are shown in Table 2.

[Example 6]

<Production of water-absorbent resin particles>

1.5 g of the water-absorbent resin particles manufactured in Manufacturing Example 1 and 1.5 g of the water-absorbent resin particles manufactured in Manufacturing Example 2 were uniformly mixed to obtain water-absorbent resin particles of Example 6. Table 2 shows the physical property values of the water-absorbent resin particles of Example 6.

<Production of absorbent article>

An absorbent article was produced in the same manner as in Example 1, except that the water-absorbent resin particles of Example 6 were used. The amount of return and the diffusion area of the absorbent article of Example 6 were measured. The measurement results are shown in Table 2.

[Example 7]

<Production of water-absorbent resin particles>

1.6 g of the water-absorbent resin particles manufactured in Manufacturing Example 1 and 1.4 g of the water-absorbent resin particles manufactured in Manufacturing Example 3 were uniformly mixed to obtain water-absorbent resin particles of Example 7. Table 2 shows the physical property values of the water-absorbent resin particles of Example 7.

<Production of absorbent article>

An absorbent article was produced in the same manner as in Example 1, except that the water-absorbent resin particles of Example 7 were used. The amount of return and the diffusion area of the absorbent article of Example 7 were measured. The measurement results are shown in Table 2.

[Example 8]

<Production of water-absorbent resin particles>

1.8 g of the water-absorbent resin particles manufactured in Manufacturing Example 1 and 1.2 g of the water-absorbent resin particles manufactured in Manufacturing Example 2 were uniformly mixed to obtain water-absorbent resin particles of Example 8. Table 2 shows the physical property values of the water-absorbent resin particles of Example 8.

<Production of absorbent article>

An absorbent article was produced in the same manner as in Example 1, except that the water-absorbent resin particles of Example 8 were used. The amount of return and the diffusion area of the absorbent article of Example 8 were measured. The measurement results are shown in Table 2.

[Example 9]

<Production of water-absorbent resin particles>

2.6 g of the water-absorbent resin particles manufactured in Manufacturing Example 1 and 0.4 g of the water-absorbent resin particles manufactured in Manufacturing Example 3 were uniformly mixed to obtain water-absorbent resin particles of Example 9. Table 2 shows the physical property values of the water-absorbent resin particles of Example 9.

<Production of absorbent article>

An absorbent article was produced in the same manner as in Example 1, except that the water-absorbent resin particles of Example 9 were used. The amount of return and the diffusion area of the absorbent article of example were measured. The measurement results are shown in Table 2.

[Example 10]

<Production of water-absorbent resin particles>

3.0 g of the water-absorbent resin particles produced in Manufacturing Example 1 was used as they were as the water-absorbent resin particles of Example 10.

<Production of absorbent article>

An absorbent article was produced in the same manner as in Example 1, except that the water-absorbent resin particles of Example 10 were used. The amount of return and the diffusion area of the absorbent article of Example 10 were measured. The measurement results are shown in Table 2.

[Example 11]

<Production of water-absorbent resin particles>

1.5 g of the water-absorbent resin particles manufactured in Manufacturing Example 2 and 1.5 g of the water-absorbent resin particles manufactured in Manufacturing Example 6 were uniformly mixed to obtain water-absorbent resin particles of Example 11. Table 2 shows the physical property values of the water-absorbent resin particles of Example 11.

<Production of absorbent article>

An absorbent article was produced in the same manner as in Example 1, except that the water-absorbent resin particles of Example 11 were used. The amount of return and the diffusion area of the absorbent article of Example 11 were measured. The measurement results are shown in Table 2.

[Comparative Example 1]

<Production of water-absorbent resin particles>

3.0 g of the water-absorbent resin particles produced in Manufacturing Example 2 was used as they were as the water-absorbent resin particles of Comparative Example 1.

<Production of absorbent article>

An absorbent article was produced in the same manner as in Example 1, except that the water-absorbent resin particles of Comparative Example 1 were used. The amount of return and the diffusion area of the absorbent article of Comparative Example 1 were measured. The measurement results are shown in Table 2.

[Comparative Example 2]

<Production of water-absorbent resin particles>

3.0 g of the water-absorbent resin particles produced in Manufacturing Example 3 was used as they were as the water-absorbent resin particles of Comparative Example 2.

<Production of absorbent article>

An absorbent article was produced in the same manner as in Example 1, except that the water-absorbent resin particles of Comparative Example 2 were used. The amount of return and the diffusion area of the absorbent article of Comparative Example 2 were measured. The measurement results are shown in Table 2.

[Comparative Example 3]

<Production of water-absorbent resin particles>

3.0 g of the water-absorbent resin particles produced in Manufacturing Example 5 was used as they were as the water-absorbent resin particles of Comparative Example 3.

<Production of absorbent article>

An absorbent article was produced in the same manner as in Example 1, except that the water-absorbent resin particles of Comparative Example 3 were used. The amount of return and the diffusion area of the absorbent article of Comparative Example 3 were measured. The measurement results are shown in Table 2.

[Table 2]

| | Water-absorbent resin particles (mass ratio) | Physical properties of water-absorbent resin particles | | | | Evaluation of water-absorbent article | |
|---|---|---|---|---|---|---|---|
| | | Water absorp tion rate (sec.) | Water retenti on ability (g/g) | Water absorpti on amt. under load (mL/g) | Med. particle diameter ($\mu$m) | Amt. of return (g) | Diffusio n area (cm$^2$) |
| Example 1 | Manufacturing Ex 1 and 2 (1:14) | 26 | 41 | 30 | 360 | 0.01 | 217 |
| Weighted avg. val. | | 32 | 42 | 32 | 359 | 0.22 | 229 |
| Example 2 | Manufacturing Ex. 4 | 19 | 55 | 21 | 160 | 0.03 | 164 |
| Example 3 | Manufacturing Ex. 1 and 2 (2:13) | 17 | 41 | 28 | 360 | 0.01 | 204 |
| Weighted avg. val. | | 30 | 41 | 30 | 359 | 0.42 | 218 |
| Example 4 | Manufacturing Ex. 1 and 2 (1:3) | 8 | 41 | 20 | 360 | 0.09 | 156 |
| Weighted avg. val. | | 26 | 41 | 28 | 358 | 0.76 | 199 |
| Example 5 | Manufacturing Ex. 1 and 4 (1:1) | 4 | 46 | 18 | 240 | 0.78 | 96 |
| Weighted avg. val. | | 11 | 47 | 17 | 255 | 1.49 | 120 |
| Example 6 | Manufacturing Ex. 1 and 2 (1:1) | 7 | 40 | 19 | 360 | 0.89 | 106 |
| Weighted avg. val. | | 19 | 40 | 23 | 355 | 1.49 | 158 |
| Example 7 | Manufacturing Ex. 1 and 3 (8:7) | 4 | 41 | 22 | 360 | 1.81 | 106 |
| Weighted avg. val. | | 27 | 40 | 23 | 359 | 1.59 | 171 |
| Example 8 | Manufacturing Ex. 1 and 2 (3:2) | 4 | 40 | 18 | 360 | 1.03 | 101 |
| Weighted avg. val. | | 15 | 40 | 21 | 354 | 1.78 | 141 |

(continued)

| | Water-absorbent resin particles (mass ratio) | Physical properties of water-absorbent resin particles | | | | Evaluation of water-absorbent article | |
|---|---|---|---|---|---|---|---|
| | | Water absorp tion rate (sec.) | Water retenti on ability (g/g) | Water absorpti on amt. under load (mL/g) | Med. particle diameter ($\mu$m) | Amt. of return (g) | Diffusio n area (cm$^2$) |
| Example 9 | Manufacturing Ex. 1 and 3 (13:2) | 3 | 39 | 16 | 350 | 2.89 | 84 |
| Weighted avg. val. | | 10 | 39 | 16 | 353 | 2.56 | 102 |
| Example 10 | Manufacturing Ex. 1 | 3 | 38 | 13 | 350 | 2.95 | 75 |
| Example 11 | Manufacturing Ex. 2 and 6 (1:1) | 6 | 30 | 29 | 380 | 0.70 | 138 |
| Comp. Example 1 | Manufacturing Ex. 2 | 34 | 42 | 33 | 360 | 0.03 | 240 |
| Comp. Example 2 | Manufacturing Ex. 3 | 54 | 43 | 34 | 370 | 0.03 | 281 |
| Comp. Example 3 | Manufacturing Ex. 5 | 2 | 35 | 22 | 440 | 5.01 | 68 |

It is noted that regarding Examples 1 and 3 to 9 which include the water-absorbent resin particles A and the water-absorbent resin particles B, based on the mass ratio of the water-absorbent resin particles A and the water-absorbent resin particles B which are included in these examples and the various physical properties (the physical properties of the water-absorbent resin particles and the evaluation of the water-absorbent article) of Example 2, Example 10, Comparative Example 1, and Comparative Example 2, which include a single kind of the water-absorbent resin particles A or water-absorbent resin particles B, the weighted average value of these various physical properties was calculated as the predicted value. These predicted values are also shown in Table 2.

As shown in Table 2, in Examples 1 and 3 to 9 which include the water-absorbent resin particles A and the water-absorbent resin particles B, the diffusion area is better than the weighted average value (predicted value) in the evaluation of the absorbent article, and particularly, in Examples 1, 3 to 6, and 8, the diffusion area and the amount of return are better than the weighted average value (predicted value). As described above, it has been confirmed that in the examples in which the water-absorbent resin particles A and the water-absorbent resin particles B are used in combination, a synergistic effect is exhibited regarding the performance of the water-absorbent article.

[Measuring method for physical properties of water-absorbent resin particles]

(Water absorption rate)

A water absorption rate test using the Vortex method was carried out at room temperature. 50±0.1 g of physiological saline was weighed and placed in a beaker having a capacity of 100 mL. A magnetic stirrer bar (8 mm $\varphi$ × 30 mm, no ring) was put into the solution, and the beaker was immersed in a constant temperature water tank to adjust the liquid temperature to 25 ± 0.2°C. Subsequently, the beaker was placed on the magnetic stirrer, and at a rotation speed of 600 rpm, a vortex was generated in the physiological saline, and then 2.0 g of the water-absorbent resin particles were quickly added to the beaker. Using a stopwatch, the time (seconds) from the time when the water-absorbent resin particles were added to the time when the vortex of the liquid surface converged was measured and denoted as the water absorption rate of the water-absorbent resin particles.

(Water retention ability)

A water retention ability test was carried out at room temperature. A cotton bag (cotton broadcloth No. 60, 100 mm in width × 200 mm in length) in which 2.0 g of the water-absorbent resin particles was placed was installed in a beaker having a capacity of 500 mL. 500 g of physiological saline was poured into the cotton bag containing the water-absorbent resin particles at one time so that lumps could not be produced. The upper part of the cotton bag was bound with a rubber band and left to stand for 30 minutes, and thereby the water-absorbent resin particles were swollen. The cotton bag after an elapse of 30 minutes was dehydrated for 1 minute using a dehydrator (manufactured by KOKUSAN Co., Ltd., product number: H-122) which had been set such that the centrifugal force was 167 G. Thereafter, a mass Wa (g) of the dehydrated cotton bag containing the swollen gel was measured. The same operation was carried out without the addition of the water-absorbent resin particles, the empty mass Wb (g) at the time in a case where the cotton bag was wet was measured. The water retention ability for physiological saline was calculated from the following expression.

Water retention ability for physiological saline [g/g] = (Wa - Wb)/2.0

(Water absorption amount under load)

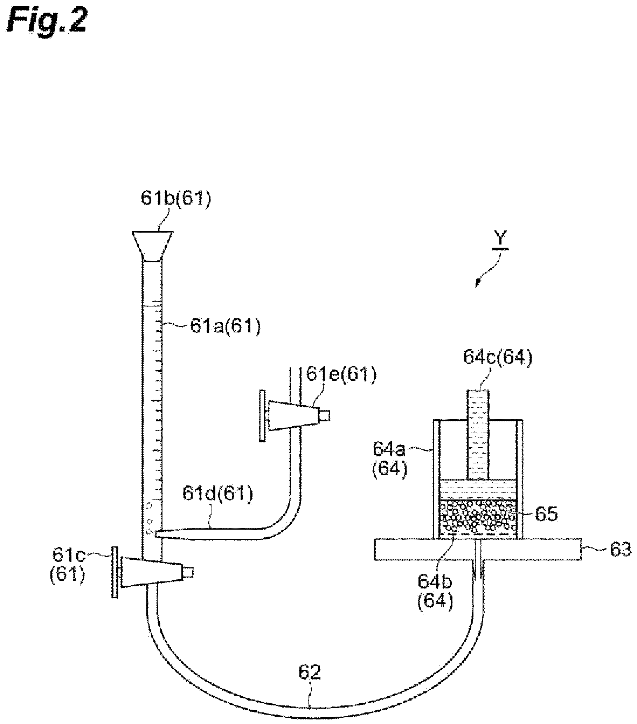

The water absorption amount of the water-absorbent resin particles in the physiological saline under a load (under pressurization) at room temperature was measured by using a measurement device Y shown in Fig. 2. The measurement device Y is formed of a burette unit 61, a conduit 62, a measurement table 63, and a measurement unit 64 placed on the measurement table 63. The burette unit 61 has a burette 61a extending in a vertical direction, a rubber stopper 61b disposed at the upper end of the burette 61a, a cock 61c disposed at the lower end of the burette 61a, an air introduction tube 61d of which one end extends into the burette 61a in the vicinity of the cock 61c, and a cock 61e disposed on the other end side of the air introduction tube 61d. The conduit 62 is attached between the burette unit 61 and the measurement table 63. The inner diameter of the conduit 62 is 6 mm. At the central portion of the measurement table 63, a hole having a diameter of 2 mm is formed, and the conduit 62 is connected thereto. The measurement unit 64 has a cylinder 64a (made of acrylic resin (plexiglass)), a nylon mesh 64b adhered to the bottom of the cylinder 64a, and a weight 64c. The inner diameter of the cylinder 64a is 20 mm. The opening of the nylon mesh 64b is 75 μm (200 mesh). At the time of measurement, the water-absorbent resin particles 65 to be measured are uniformly scattered on the nylon mesh 64b. The weight 64c has a diameter of 19 mm, and the weight 64c has a mass of 59.8 g. The weight 64c is placed over the water-absorbent resin particles 65 and can apply a load of 2.07 kPa to the water-absorbent resin particles 65.

After 0.100 g of the water-absorbent resin particles 65 were placed in the cylinder 64a of the measurement device Y, the weight 64c was placed, and the measurement was started. The amount of reduction in the water level of the physiological saline inside the burette 61a corresponds to the amount of the physiological saline absorbed by the water-absorbent resin particles 65 because the same volume of air as that of the physiological saline absorbed by the water-absorbent resin particles 65 is quickly and smoothly supplied to the inside of the burette 61a from the air introduction tube. The scale of the burette 61a is engraved from top to bottom in increments of 0 mL to 0.5 mL. As the water level of the physiological saline, a scale Va of the burette 61a before the start of water absorption and a scale Vb of the burette 61a after 60 minutes from the start of water absorption were read, and the water absorption amount under a load was calculated from the following expression.

$$\text{Water absorption amount under load [mL/g]} = (V_b - V_a)/0.1$$

(Medium particle diameter)

The water-absorbent resin particles were allowed to pass through a sieve having an opening of 250 μm, which was the JIS Z 8801-1 standard sieve. The medium particle diameter was measured using a combination of sieves of the following (A) in a case where the amount remaining on the sieve was 50% by mass or more with respect to the total amount, or using a combination of sieves of the following (B) in a case where the amount remaining on the sieve was less than 50% by mass.

(A) JIS standard sieves were combined in the following order from the top: a sieve having an opening of 710 μm, a sieve having an opening of 600 μm, a sieve having an opening of 500 μm, a sieve having an opening of 425 μm, a sieve having an opening of 300 μm, a sieve having an opening of 250 μm, and a sieve having an opening of 150 μm, and a tray.

(B) JIS standard sieves were combined in the following order from the top: a sieve having an opening of 425 μm, a sieve having an opening of 250 μm, a sieve having an opening of 180 μm, a sieve having an opening of 150 μm, a sieve

having an opening of 106 $\mu$m, a sieve having an opening of 75 $\mu$m, a sieve having an opening of 45 $\mu$m, and a tray.

Water-absorbent resin particles were placed on the sieve positioned on the uppermost stage and subjected to shaking and classification for 20 minutes using a continuous fully automatic ultrasonic vibration type sieve shaker (ROBOT SHIFTER RPS-205, manufactured by SEISHIN ENTERPRISE Co., Ltd.). After the classification, the mass of the water-absorbent resin particles remaining on each sieve was calculated as a mass percentage with respect to the total amount and integrated in the descending order of the particle diameter to plot, on a logarithmic probability paper, the relationship between the opening of the sieve and the integrated value of the mass percentage of the water-absorbent resin particles remaining on the sieve. By connecting the plots on the probability paper with a straight line, the particle diameter corresponding to the cumulative mass percentage of 50% by mass was denoted as the medium particle diameter.

<Evaluation method for absorbent article>

(Test solution)

A solution was prepared by blending and dissolving components in ion-exchanged water so that inorganic salts were present as shown below, and a small amount of Blue No. 1 was further blended therein to prepare a test solution. An absorbent article was evaluated using this test solution.

Composition of test solution

· Deionized water: 4955.5 g
· NaCl: 39.0 g
· $CaCl_2 \cdot 2H_2O$: 1.5 g
· $MgCl_2 \cdot 7H_2O$: 4.0 g
· Food Blue No. 1 (for coloration)

(Amount of return)

The absorbent article was disposed on a horizontal table at room temperature. Subsequently, 30 mL of the test solution adjusted to 25 $\pm$ 1°C was added dropwise from an upper part 1 cm above the absorbent article to the central part of the absorbent article over 8 seconds using a pump (DOSE IT P910, manufactured by INTEGRA Biosciences) to which an injection port having an inner diameter of 0.4 mm was connected. One minute after the completion of the dropwise addition of the test solution, about 75 g of filter paper (AD VANTEC No. 51A, formed to have a size of 100 mm $\times$ 100 mm) of which the mass was measured previously was placed in the vicinity of the center of the absorbent article, a weight (having a bottom surface of 100 mm $\times$ 100 mm, 5.0 kg) of about 0.7 psi was quickly placed thereon, and a load was applied for 5 seconds. Thereafter, the weight and the filter paper were removed, and the mass of the test solution absorbed by the filter paper was measured. The amount of increase in the filter paper before and after the test was denoted as the amount of return [g].

(Diffusion area)

The absorbent article was disposed on a horizontal table at room temperature. Subsequently, 30 mL of the test solution adjusted to 25 $\pm$ 1°C was added dropwise from an upper part 1 cm above the absorbent article to the central part of the absorbent article over 8 seconds using a pump (DOSE IT P910, manufactured by INTEGRA Biosciences) to which an injection port having an inner diameter of 0.4 mm was connected. Two minutes after the completion of the dropwise addition of the test solution, a length in the vertical length passing through the central part of the absorbent article (the diffusion length in the vertical direction) and a length in the horizontal length passing through the central part of the absorbent article (the diffusion length in the horizontal direction) and were measured in the diffusion region of the test solution. A diffusion area [cm$^2$] was calculated from each diffusion length according to the following expression.

Diffusion area [cm$^2$] = (diffusion length in vertical direction/2) $\times$ (diffusion length in horizontal direction/2) $\times$ 3.14

**Industrial Applicability**

According to the water-absorbent resin particles according to the present disclosure, since the amount of return and the diffusion area of the absorbent article can be suppressed, the replacement frequency of the absorbent article (for example, the pet sheet) can be reduced. As a result, it is possible to suppress the use amount of the water-absorbent resin particles and materials (for example, natural raw materials (biomass resources) such as pulp and nonwoven fabric) other than the water-absorbent resin particles included in the absorbent article, which can contribute to the conservation of the global environment.

**Reference Signs List**

10: absorber,
11: resin layer,
11a: water-absorbent resin particles,
12: hydrophilic fiber layer,
21: first shape retaining member,
22: second shape retaining member,
30: protective member,
35: adhesive,
50: absorbent article,
61: burette unit,
61a: burette,
61b: rubber stopper,
61c: cock,
61d: air introduction tube,
61e: cock,
62: conduit,
63: measurement table,
64: measurement unit,
64a: cylinder,
64b: nylon mesh,
64c: weight,
Y: measurement device.

**Claims**

1. Water-absorbent resin particles having a water absorption rate of 3 to 30 seconds and a water absorption amount under a load of 2.07 kPa of 10 mL/g or more.

2. The water-absorbent resin particles according to Claim 1,

   wherein the water absorption rate is 6 to 10 seconds, and
   a medium particle diameter is 150 $\mu$m or more.

3. The water-absorbent resin particles according to Claim 1 or 2,

   wherein the water-absorbent resin particles comprise water-absorbent resin particles A and water-absorbent resin particles B,
   a water absorption rate of the water-absorbent resin particles A is 5 seconds or less,
   a water absorption amount under a load of 2.07 kPa of the water-absorbent resin particles A is 8 to 35 mL/g,
   a water absorption rate of the water-absorbent resin particles B is 15 seconds or more, and
   a water absorption amount under a load of 2.07 kPa of the water-absorbent resin particles B is 20 to 35 mL/g.

4. An absorbent article comprising:
   the water-absorbent resin particles according to Claim 1 or 2.

**Fig.1**

## Fig.2

# EP 4 549 511 A1

<table>
<tr><td colspan="2" style="text-align:left">INTERNATIONAL SEARCH REPORT</td><td>International application No.</td></tr>
<tr><td colspan="2"></td><td>**PCT/JP2023/026443**</td></tr>
</table>

**A.    CLASSIFICATION OF SUBJECT MATTER**

*C08L 33/02*(2006.01)i; *B01J 20/26*(2006.01)i; *B01J 20/28*(2006.01)i
FI:    B01J20/26 D; B01J20/28 Z; C08L33/02

According to International Patent Classification (IPC) or to both national classification and IPC

**B.    FIELDS SEARCHED**

Minimum documentation searched (classification system followed by classification symbols)

C08L33/02; B01J20/26; B01J20/28

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2019/142872 A1 (SUMITOMO SEIKA CHEMICALS CO., LTD.) 25 July 2019 (2019-07-25) | 1-2, 4 |
| | paragraphs [0002], [0017], [0022], [0029], example 1, comparative example 2 | |
| Y | paragraphs [0002], [0017], [0022], [0029], example 1, comparative example 2 | 3 |
| Y | JP 9-149916 A (UNI-CHARM CO., LTD.) 10 June 1997 (1997-06-10) | 3 |
| | paragraphs [0001], [0003] | |

☐ Further documents are listed in the continuation of Box C.        ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **11 September 2023** | **26 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

27

International application No.

**PCT/JP2023/026443**

| Patent document cited in search report | | | Publication date (day/month/year) | Patent family member(s) | | | Publication date (day/month/year) |
|---|---|---|---|---|---|---|---|
| WO | 2019/142872 | A1 | 25 July 2019 | US | 2020/0353443 | A1 | |
| | | | | paragraphs [0002], [0015], [0024], [0036], example 1, comparative example 2 | | | |
| | | | | EP | 3741783 | A1 | |
| | | | | CN | 111542553 | A | |
| | | | | KR | 10-2020-0104312 | A | |
| JP | 9-149916 | A | 10 June 1997 | US | 5800419 | A | |
| | | | | p. 1, left column, lines 1-3, p. 1, left column, lines 17-46 | | | |
| | | | | EP | 781539 | A2 | |
| | | | | DE | 69614353 | T2 | |
| | | | | SG | 64408 | A1 | |
| | | | | BR | 9604629 | A | |
| | | | | CA | 2191388 | A1 | |
| | | | | ES | 2160798 | T3 | |
| | | | | CN | 1155439 | C | |
| | | | | MX | 9605993 | A | |
| | | | | KR | 10-0449392 | B1 | |
| | | | | AU | 7197896 | A | |
| | | | | MY | 120109 | A | |
| | | | | TW | 309422 | B | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

* JP 2005323842 A